# FASCICULE DE BREVET EUROPEEN

(11) **EP 2 232 621 B1**
(45) Date de publication et mention de la délivrance du brevet: **08.06.2011**
(21) Numéro de dépôt: 08865433.0
(22) Date de dépôt: 23.12.2008
(51) Int. Cl.: H01M 8/04, H04M 1/02, H01M 8/00

(54) **DISPOSITIF DE PROTECTION DE PILE A COMBUSTIBLE**
BRENNSTOFFZELLENSCHUTZVORRICHTUNG
FUEL CELL PROTECTION DEVICE

(30) Priorité: 24.12.2007 FR 0760348
(43) Date de publication de la demande: 29.09.2010
(73) Titulaire: STMicroelectronics (Tours) SAS, 37100 Tours (FR); Commissariat à l'Énergie Atomique et aux Énergies Alternatives, 75015 Paris (FR)
(72) Inventeur: ROY, Mathieu, F-37300 Joue-les-Tours (FR); LAURENT, Jean-Yves, F-38420 Domene (FR)
(74) Mandataire: de Beaumont, Michel
(86) Numéro de dépôt international: PCT/FR2008/052405
(87) Numéro de publication internationale: WO 2009/081080

(56) Documents cités:
- JP-A- 2005 032 517
- US-A1- 2004 209 133
- US-A1- 2005 106 441
- US-A1- 2007 218 338
- US-A1- 2007 228 740

## Description

### Domaine de l'invention

La présente invention concerne l'utilisation de piles à combustible à hydrogène-air dans des dispositifs portables. Ces piles à combustible sont généralement constituées d'une ou plusieurs plaquettes de silicium dont chacune contient un grand nombre de microcellules.

### Exposé de l'art antérieur

Les piles à combustible à hydrogène-air visent notamment à équiper des équipements électroniques portables tels que des ordinateurs, des téléphones, des lecteurs de musique, et autres.

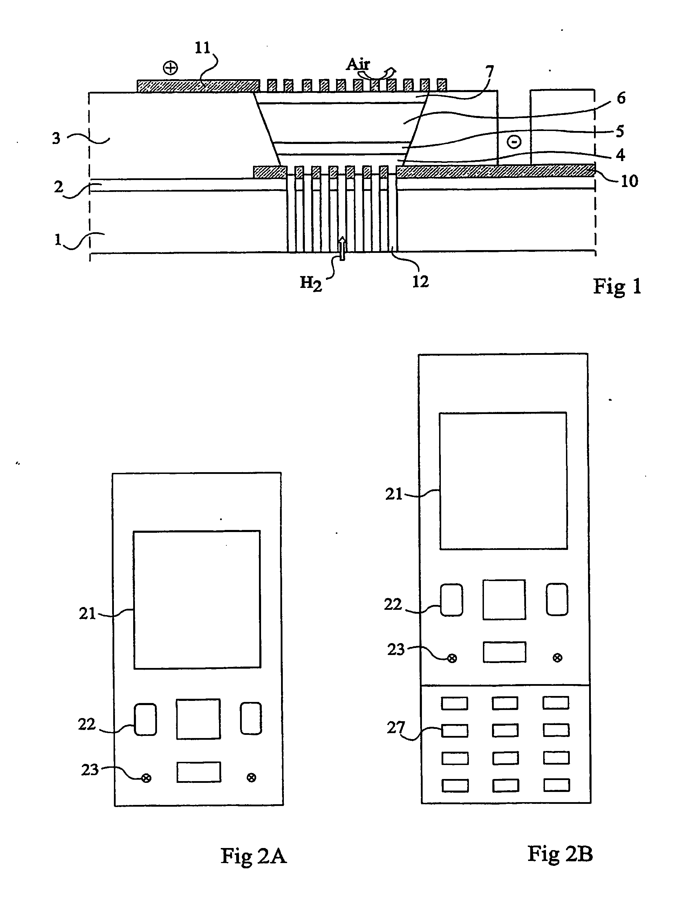

La figure 1 représente un exemple de microcellule de pile à combustible intégrée réalisée en utilisant des techniques de microélectronique. Cette cellule est formée sur une tranche de silicium 1 revêtue d'une première couche isolante 2 fine et d'une seconde couche isolante 3 plus épaisse. Une ouverture est formée dans une partie de la couche isolante 3. Dans cette ouverture se trouve un empilement d'un support de catalyseur 4, d'une première couche de catalyseur 5, d'un électrolyte 6 et d'une seconde couche de catalyseur 7. Cet ensemble de couches constitue l'empilement actif de la cellule de pile à combustible. Une électrode 10, placée sur la première couche isolante 2, permet de prendre un contact sur la face inférieure de la cellule de pile, sur le support 4. Une ouverture dans la seconde couche isolante 3 permet d'accéder à l'électrode 10. Une électrode supérieure 11 permet de prendre un contact sur la couche de catalyseur supérieure 7. Les électrodes 10 et 11 sont perforées et des canaux 13 sont formés dans la tranche de silicium 1 en regard des perforations dans la métallisation de face inférieure. L'électrode inférieure 10 et l'électrode supérieure 12 constituent respectivement un collecteur d'anode et un collecteur de cathode.

L'électrolyte 6 est par exemple un acide polymère tel que du Nafion sous forme solide et les couches de catalyseur 5 et 7 sont par exemple des couches à base de carbone et de platine. Ceci ne constitue qu'un exemple de réalisation. Divers types de piles à combustible réalisables sous la forme illustrée en figure 1 sont connus dans la technique.

Pour faire fonctionner la pile à combustible, on injecte de l'hydrogène selon la flèche H₂ du côté de la face inférieure et de l'air (porteur d'oxygène) est injecté du côté de la face supérieure. L'hydrogène est "décomposé" au niveau de la couche de catalyseur 5 pour former d'une part des protons H⁺ qui se dirigent vers l'électrolyte 6 et d'autre part des électrons qui se dirigent vers l'extérieur de la pile par le collecteur d'anode 10. Les protons H⁺ traversent l'électrolyte 6 jusqu'à rejoindre la couche de catalyseur 7 où ils se recombinent avec l'oxygène et avec des électrons pour former des microgouttelettes d'eau.

On soulignera que la figure 1 n'est pas à l'échelle. En particulier, la tranche de silicium 1 a typiquement une épaisseur de l'ordre de 250 à 700 µm tandis que l'empilement actif des couches 4 à 7 a typiquement une épaisseur de l'ordre de 30 à 50 µm.

Une pile à combustible classique est constituée d'un grand nombre de cellules adjacentes du type de celle représentée en figure 1, généralement plusieurs centaines, intégrées sur un même substrat et convenablement connectées. En pratique, une batterie de piles à combustible (appelée ci-après "pile") utilisable dans des dispositifs portables tels que des téléphones portables doit avoir une surface en contact avec l'air de l'ordre de quelques centimètres carré (par exemple 2 à 3 cm de côté).

Le document US 2007/218338 décrit un téléphone portable comprenant une pile à combustible qui comporte des ouvertures pour l'alimentation de la cathode avec de l'air. Lesdites ouvertures sont obturables grâce à un système de glissière pour éviter un dessèchement de la pile à combustible.

Les Demandeurs ont noté que, quand on utilisait de telles piles à combustibles dans des dispositifs portables, et que la pile cessait d'être utilisée pendant un certain temps, le redémarrage était difficile, c'est-à-dire que pendant une certaine durée après la remise en route, la pile à combustible était incapable de fournir le courant nominal visé.

Ainsi, un objet de la présente invention est de pallier aux inconvénients de l'art antérieur et plus particulièrement de prévoir une pile à combustible susceptible de redémarrer rapidement et efficacement dès sa mise en fonctionnement, même après une période de non utilisation relativement longue (par exemple de l'ordre de quelques jours à quelques semaines selon les conditions ambiantes).

### Résumé de l'invention

Ainsi, un mode de réalisation de la présente invention prévoit un dispositif comprenant une pile à combustible à hydrogène-air, comportant un élément mobile susceptible, en position fermée, de recouvrir la cathode de la pile de façon sensiblement étanche.

La partie de l'élément mobile venant recouvrir la cathode de la pile comporte un évidement contenant une substance hydrophile.

Selon un mode de réalisation de la présente invention, l'élément mobile est constitué d'un assemblage de grilles formant volet.

Un mode de réalisation de la présente invention prévoit un téléphone portable comprenant un dispositif tel que ci-dessus.

Selon un mode de réalisation de la présente invention, Le téléphone portable est du type téléphone à glissière dont un élément coulisse par rapport à l'autre, la pile étant disposée sur l'un des deux éléments coulissants, de sorte que, en position ouverte, la cathode de la pile est apparente et que, en position fermée, la pile obture un évidement défini dans l'élément opposé.

Selon un mode de réalisation de la présente invention, la pile se trouve sensiblement au dos de l'écran du téléphone portable.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 décrite ci-dessus représente schématiquement une cellule d'une micropile à combustible ;
les figures 2A et 2B sont des vues de dessus d'un exemple de téléphone portable incorporant un mode de réalisation de la présente invention, respectivement en position fermée et en position ouverte ;
les figures 3A et 3B sont des vues de côté d'un exemple de téléphone portable incorporant un mode de réalisation de la présente invention, respectivement en position fermée et en position ouverte ;
la figure 4 est un agrandissement d'une partie de la figure 3B ;
la figure 5 représente schématiquement un dispositif selon une variante de réalisation de la présente invention ;
la figure 6 représente schématiquement un dispositif selon une autre variante de réalisation de la présente invention ; et
la figure 7 illustre une variante de mise en oeuvre de la présente invention.

### Description détaillée

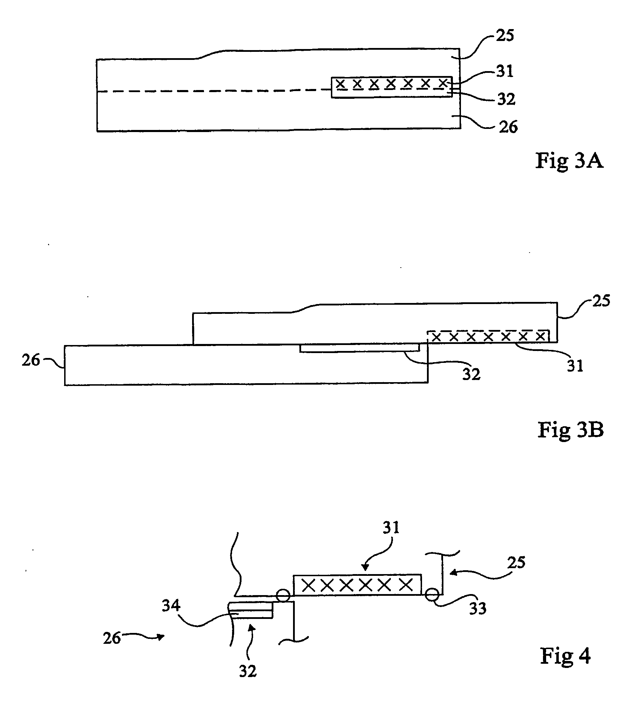

L'ensemble des figures 2A-2B et 3A-3B représente un exemple de téléphone portable à glissière, respectivement en vue de dessus et en vue de côté, et respectivement en position fermée et en position ouverte.

En position fermée, la figure 2A représente la face avant du téléphone portable et la figure 3A est une vue de côté. Dans cet exemple, la face avant comprend un écran 21 et une zone comportant des boutons de commande 22 et des voyants 23. Comme l'illustre la figure 3A, le téléphone portable est divisé en deux éléments : un élément supérieur 25 et un élément inférieur 26. L'élément supérieur 25 peut coulisser par rapport à l'élément inférieur 26, par exemple au moyen de glissières non représentées.

Comme l'illustrent les figures 2B et 3B, en position ouverte, quand on a fait coulisser l'élément supérieur par rapport à l'élément inférieur, on dégage du côté de la face avant une zone de clavier 27 et généralement un interrupteur est actionné pour mettre le téléphone dans un état actif. De nombreuses variantes de systèmes de coulissement et de nombreuses variantes d'aspect du téléphone portable et de disposition des divers écrans, touches et voyants sont possibles et sont utilisées. On a représenté par souci de simplification une forme extrêmement simplifiée de contour du téléphone ; généralement, les fabricants adoptent diverses formes spécifiques pour obtenir une meilleure ergonomie et/ou pour des considérations esthétiques.

Comme l'illustrent les figures 3A et 3B, la face inférieure de l'élément supérieur 25 comporte un évidement dans lequel est insérée une pile à combustible 31 dont la cathode est apparente. La face supérieure de l'élément inférieur 26 comporte un évidement 32 disposé de sorte que, quand le téléphone est en position fermée, la surface de cathode de la pile à combustible 31 vient en regard de l'évidement 32. En position ouverte à la suite du coulissement des deux éléments du téléphone l'un par rapport à l'autre, la surface de cathode de la pile à combustible 31 devient apparente.

Ainsi, quand le téléphone portable est en position ouverte (en position de fonctionnement) la surface apparente de la pile à combustible 31 est exposée à l'atmosphère ambiante. Bien entendu, l'autre face de la pile à combustible 31 est en communication avec une source ou un réservoir d'hydrogène non représenté. En position fermée, l'évidement 32 de l'élément inférieur 26 qui vient en regard de la pile 31 présente une périphérie telle que l'évidement 32 définit avec la surface de cathode de la pile 31 une enceinte sensiblement étanche. Ceci est mieux représenté dans la vue agrandie de la figure 4 dans laquelle on peut voir, autour de la région de pile 31, un joint périphérique 33 qui vient coopérer avec une surface en regard à la périphérie de l'évidement 32. Ce joint ne constitue qu'un exemple possible de moyen pour définir une enceinte sensiblement étanche. L'évidement 32 contient de préférence un matériau hydrophile 34 susceptible de conserver l'humidité.

Le fonctionnement du dispositif est le suivant. En position ouverte, la pile à combustible fonctionne de façon classique en ayant une surface exposée à l'air et l'autre à de l'hydrogène. Dans un mode de réalisation préféré, la pile 31 est disposée au dos de l'écran placé sur la face opposée de l'élément supérieur 25. En effet, généralement, l'utilisateur d'un téléphone portable ne place pas sa main en regard de l'écran, mais en regard du clavier pour mieux pouvoir presser les touches de celui-ci. Ainsi, la main de l'utilisateur n'est pas susceptible de gêner le fonctionnement de la pile à combustible dont la cathode doit être exposée à l'air ambiant.

En position fermée, l'évidement 32 est en regard de la pile 31 et recouvre cette pile. Il est prévu dans l'évidement 32 un élément hydrophile 14 initialement imbibé d'eau, en position fermée, la cathode de la pile se trouve dans une ambiance de vapeur saturante en eau et les piles ne "sèchent" pas. Les Demandeurs ont constaté que le fait de maintenir ainsi lors des périodes de non utilisation la face de cathode de la pile dans une atmosphère saturée en humidité, entraîne que lors d'une remise en route de la pile, celle-ci est immédiatement susceptible de fournir la tension et le courant nominaux que l'on en attend. Par contre, en l'absence de la protection décrite, la pile se dégrade très rapidement, c'est-à-dire qu'elle met un certain temps à se remettre en route et à être apte à fournir sa puissance nominale, surtout en atmosphère sèche.

Pour conserver la cathode apparente de la pile dans une atmosphère de vapeur saturante, un matériau hydrophile 14 est présent dans l'évidement 32. En effet, après un certain temps de fonctionnement, la face de cathode de la pile se charge de microgouttelettes d'eau et, quand la structure est refermée, ces microgouttelettes s'évaporent progressivement dans la cavité et si celle-ci est bien étanche, une atmosphère saturée en humidité se maintient. On comprendra qu'alors, si on veut conserver une atmosphère saturée en humidité pendant une longue durée, il faudra veiller tout particulièrement à une bonne étanchéité de l'assemblage entre les deux parties coulissantes.

On a décrit précédemment une application particulière de l'invention à un téléphone portable à glissière. De façon générale, la présente invention s'applique à tout dispositif portable alimenté par pile, tel qu'un ordinateur de poche ou une console de jeux portable. La présente invention s'applique aussi à une source de tension autonome (un chargeur) destinée à être connectée à un dispositif électrique. Dans le domaine des téléphones portables, il existe des systèmes autres que des systèmes à glissière, par exemple des systèmes à écran rabattant. Dans toute structure comprenant deux éléments dont l'un est mobile par rapport à l'autre, on pourra prévoir que l'un des deux éléments comporte une pile à combustible dont la cathode est apparente et que l'autre élément comporte un évidement destiné à créer, quand la structure est fermée, une cavité sensiblement étanche et saturée en humidité en regard de la cathode de la pile.

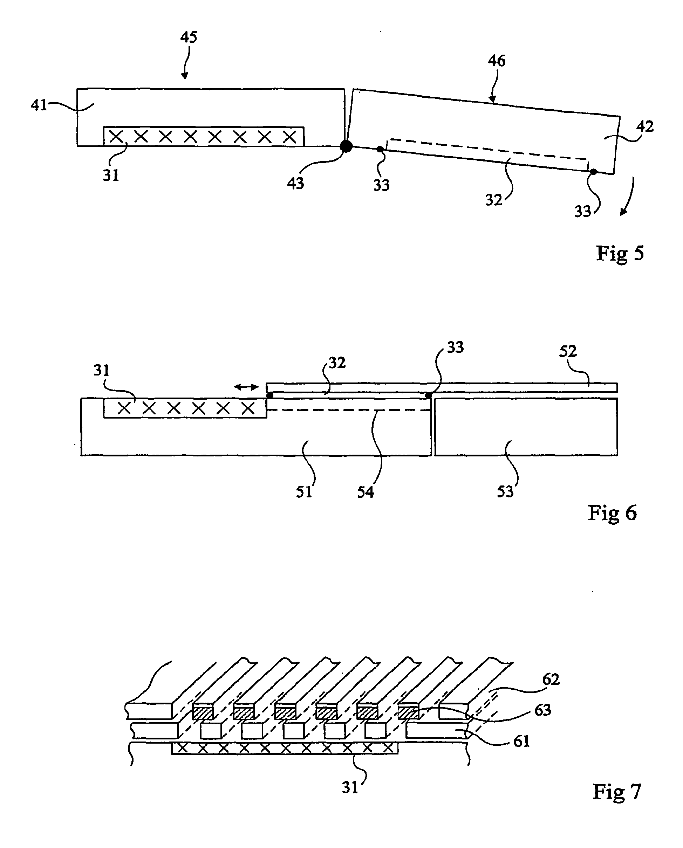

La figure 5 illustre une première variante d'un dispositif selon la présente invention. Le dispositif est constitué de deux parties 41 et 42 articulées par une charnière 43. Le dispositif est représenté en position presque complètement ouverte. La face inférieure de la partie gauche 41 du dispositif comprend une pile ou une batterie de pile 31 dont la cathode est apparente et la partie inférieure 42 comprend un évidement 32. L'évidement 32 est entouré d'un joint ou autre moyen d'étanchéité 33 venant s'appuyer sur la face inférieure de la partie 41 au niveau de la périphérie de la pile 31 quand le dispositif est refermé. Les faces supérieure 45 et 46 des parties repliables 41 et 42 comprennent tout moyen utile à l'utilisation du dispositif. Par exemple la face 45 comporte un écran et la face 46 un clavier. Dans ce mode de réalisation, comme dans le précédent, la position d'une cartouche d'hydrogène destinée à alimenter la pile n'est pas illustrée. Cette cartouche pourrait être insérée dans l'une des parties 41 et 42, ou être enfichée sur l'une de ces parties.

La figure 6 est une vue de côté d'une autre variante de réalisation d'un dispositif selon la présente invention. Le dispositif comprend deux parties : une partie fixe 51 et un volet mobile 52. Le volet mobile 52 peut être déplacé en translation de façon à venir recouvrir la face supérieure d'une pile combustible 31 disposée à gauche de la partie 51. Dans la partie fixe 51 est enfichable une cartouche d'hydrogène 53 reliée à la pile par une conduite 54.

Dans certaines applications, on pourra prévoir que l'élément mobile ne définit pas un couvercle d'une seule pièce mais est constitué par exemple de deux ensembles de grilles coulissants l'un par rapport à l'autre pour former un volet coulissant. Comme cela est représenté en figure 7, la cathode de la pile 31 se trouve en regard d'une première grille 61 et d'une deuxième grille 62. Chacune de ces deux grilles est constituée de barreaux parallèles. L'une des deux grilles est susceptible de coulisser par rapport à l'autre. En figure 5, la structure est représentée à une position intermédiaire. On comprendra que, quand les barreaux des grilles 61 et 62 sont en regard, la face supérieure de l'ensemble de piles à combustible 31 est exposée à l'oxygène de l'air. Quand les deux grilles sont en position alternée, il se forme au-dessus de la pile 31 une structure fermée, telle que la pile est en regard des faces inférieures des grilles 61 et 62, la face inférieure de la grille supérieure 62 portant de préférence un matériau hydrophile 63.

## Revendications

1. Dispositif comprenant une pile à combustible à hydrogène-air, comportant un élément mobile (32) susceptible, en position fermée, de recouvrir la cathode de la pile (31) de façon sensiblement étanche, **caractérisé en ce que** la partie de l'élément mobile venant recouvrir la cathode de la pile (31) comporte un évidement contenant une substance hydrophile (34).

2. Dispositif selon la revendication 1, dans lequel l'élément mobile est constitué d'un assemblage de grilles (41, 42) formant volet.

3. Téléphone portable comprenant un dispositif selon la revendication 1 ou 2.

4. Téléphone portable selon la revendication 3, du type téléphone à glissière dont un élément coulisse par rapport à l'autre, la pile étant disposée sur l'un des deux éléments coulissants, de sorte que, en position ouverte, la cathode de la pile est apparente et que, en position fermée, la pile obture un évidement défini dans l'élément opposé.

5. Téléphone portable selon la revendication 3 ou 4, dans lequel la pile se trouve sensiblement au dos de l'écran du téléphone portable.

## Claims

1. A device comprising a hydrogen-air fuel cell comprising a mobile element (32) likely, in closed position, to cover the cathode of the cell (31) in substantially tight fashion, **characterized in that** the portion of the mobile element covering the cathode of the cell (31) comprises a recess containing a hydrophilic substance (34).

2. The device of claim 1, wherein the mobile element is formed of an assembly of grids (41, 42) forming a flap.

3. A cell phone comprising the device of claim 1 or 2.

4. The cell phone of claim 3, of slider phone type having one element sliding with respect to the other, the cell being arranged on one of the two sliding elements, so that, in open position, the cell cathode is apparent and that, in closed position, the cell closes a recess defined in the opposite element.

5. The cell phone of claim 3 or 4, wherein the cell is substantially at the back of the cell phone display.

## Patentansprüche

1. Eine Vorrichtung, die eine Wasserstoff-Luft-Brennstoffzelle aufweist, und zwar ein bewegliches Element (32) aufweisend, welches sich in der Lage ist in geschlossener Position, die Kathode der Zelle (31) im Wesentlichen auf eine dichte Art und Weise abzudecken, **dadurch gekennzeichnet, dass** der Teil des beweglichen Elements, der die Kathode der Zelle (31) abdeckt eine Ausnehmung aufweist, die eine hydrophile Substanz (34) enthält.

2. Vorrichtung nach Anspruch 1, wobei das bewegliche Element durch eine Anordnung von Gittern (41, 42) gebildet ist, die eine Klappe bilden.

3. Ein Mobiltelefon, welches die Vorrichtung gemäß Anspruch 1 oder Anspruch 2 aufweist.

4. Mobiltelefon nach Anspruch 3 gemäß der Gleittelefonbauart mit einem Element, welches bezüglich des anderen gleitet, wobei das Mobiltelefon in dem einen der zwei Gleitelemente derart angeordnet ist, dass in der offenen Position die Kathode des Mobiltelefons erscheint, und dass in der geschlossenen Position das Mobiltelefon eine in dem entgegengesetzten Element definierte Ausnehmung abschließt.

5. Mobiltelefon nach Anspruch 3 oder 4, wobei das Mobiltelefon im Wesentlichen auf der Rückseite der Mobiltelefonanzeige bzw. -display sich befindet.
